(19)

Europäisches
Patentamt
European
Patent Office
Office européen
des brevets

(11) **EP 4 624 423 A1**

(12) **EUROPEAN PATENT APPLICATION**

(43) Date of publication:
01.10.2025 Bulletin 2025/40

(21) Application number: 25162211.4

(22) Date of filing: 07.03.2025

(51) International Patent Classification (IPC):
*C01G 53/05* (2025.01)    *C01G 53/42* (2025.01)
*C01G 53/506* (2025.01)    *H01M 4/00* (2006.01)

(52) Cooperative Patent Classification (CPC):
**C01G 53/05; C01G 53/42; C01G 53/506;
H01M 4/00;** C01P 2002/52; C01P 2002/74;
C01P 2004/61; C01P 2006/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 11.03.2024 KR 20240034116

(71) Applicant: SAMSUNG SDI CO., LTD.
Yongin-si, Gyeonggi-do 17084 (KR)

(72) Inventors:
• KIM, Jinhwa
  17084 Yongin-si (KR)

• KANG, Taegeun
  17084 Yongin-si (KR)
• KIM, Soohyeon
  17084 Yongin-si (KR)
• HONG, Youngjae
  17084 Yongin-si (KR)
• KIM, Minhan
  17084 Yongin-si (KR)
• LEE, Soonrewl
  17084 Yongin-si (KR)

(74) Representative: Marks & Clerk LLP
15 Fetter Lane
London EC4A 1BW (GB)

(54) **PREPARATION METHOD OF POSITIVE ELECTRODE ACTIVE MATERIALS, POSITIVE ELECTRODES AND RECHARGEABLE LITHIUM BATTERIES**

(57) Disclosed are a method of preparing a positive electrode active material, a positive electrode active material prepared according to the method, a positive electrode including the positive electrode active material, and a rechargeable lithium battery including the positive electrode. The method includes (i) mixing a nickel-based precursor and a first lithium raw material, and performing a first heat treatment at about 500 °C to about 750 °C to prepare a first fired product, and (ii) mixing the first fired product and a second lithium raw material, and performing a second heat treatment at about 650 °C to about 850 °C to prepare a positive electrode active material in the form of single particles including a lithium nickel-based composite oxide. A molar ratio ($L^1$) of lithium in the first lithium raw material to a total metal of the nickel-based precursor is about 0.2 to about 0.9, a molar ratio ($L^2$) of lithium in the second lithium raw material to a total metal excluding lithium in the first fired product is about 0.1 to about 0.8, and about $0.9 \leq L^1+L^2 \leq$ about 1.1.

FIG. 8

S4800 5.0kV 7.9mm x20.0k SE(M)                    2.00um

**Description**

**BACKGROUND**

**Field**

Preparation methods of positive electrode active materials are disclosed, along with positive electrodes comprising said positive electrode active materials, and rechargeable lithium batteries comprising said positive electrodes.

**Description of the Related Art**

A portable information device such as, e.g., a cell phone, a laptop, smart phone, and the like, or an electric vehicle, typically uses a rechargeable lithium battery having high energy density and portability as a driving power source. Research has been conducted to use a rechargeable lithium battery with high energy density as a driving power source or power storage power source for hybrid or electric vehicles.

Various positive electrode active materials can be used to manufacture rechargeable lithium batteries for the above applications. Among these positive electrode active materials, lithium nickel-based oxide, lithium nickel-manganese-cobalt composite oxide, lithium nickel-cobalt-aluminium composite oxide, and lithium cobalt oxide may constitute positive electrode active materials. Such nickel-based positive electrode active materials including nickel as a main transition metal are advantageous because the nickel-based positive electrode active materials may achieve high capacity. However, there are limitations due to various challenges, such as structural deterioration caused by charges and discharges, surface side reactions with an electrolyte, and deterioration due to particle cracks. For example, nickel-based positive electrode active materials may present a challenge in their preparation in that, the higher nickel content, the higher the unreacted lithium content during heat treatment, and in order to remove the unreacted lithium and control surface properties, a washing process may be required; however, this may result in loss of lithium from inside the positive electrode active materials during the washing, which may result in reducing capacity and deteriorating the control surface properties. The control surface properties may be restored by compensating the lost lithium, but the washing process and the compensation of the lithium raw material may significantly increase a material-processing cost. Accordingly, a method of manufacturing nickel-based positive electrode active materials achieving high performance, while improving surface properties may be advantageous.

**SUMMARY**

The invention provides a method of preparing a high-performance nickel-based positive electrode active material that achieves high capacity, desired or improved surface properties, low residual lithium content, high pellet density, and long lifecycle characteristics, and is a novel preparation method with reduced processing costs and increased processability and productivity.

According to a first aspect of the invention there is provided a method of preparing a positive electrode active material that includes: (i) mixing a nickel-based precursor and a first lithium raw material and performing a first heat treatment at about 500 °C to about 750 °C to prepare a first fired product, and (ii) mixing the first fired product and a second lithium raw material and performing a second heat treatment at about 650 °C to about 850 °C to prepare a positive electrode active material in a form of single particles including a lithium nickel-based composite oxide, wherein a molar ratio ($L^1$) of lithium in the first lithium raw material to a total metal of the nickel-based precursor is about 0.2 to about 0.9, a molar ratio ($L^2$) of lithium in the second lithium raw material to a total metal excluding lithium in the first fired product is about 0.1 to about 0.8, and about $0.9 \leq L^1 + L^2 \leq$ about 1.1.

According to a second aspect of the invention there is provided a positive electrode active material prepared according to the above method.

According to a third aspect of the invention there is provided a positive electrode including the aforementioned positive electrode active material.

According to a fourth aspect of the invention there is provided a rechargeable lithium battery including the aforementioned positive electrode (including the aforementioned positive electrode active material), a negative electrode, and an electrolyte.

According to the method for preparing a positive electrode active material, processing costs may be reduced, processability and productivity may be increased, and high-capacity and long lifecycle characteristics may be achieved, while providing high-performance nickel-based positive electrode active material having desired or improved surface characteristics, low residual lithium content, and high pellet density.

At least some of the above and other features of the invention are set out in the claims.

## BRIEF DESCRIPTION OF THE DRAWINGS

FIGS. 1 to 4 are schematic diagrams illustrating a rechargeable lithium battery according to some example embodiments.

FIG. 5 is a scanning electron microscope (SEM) image of the first fired product of the Example.

FIG. 6 shows the results of Rietveld Refinement of X-ray Diffraction (XRD) for the first fired product of the Example.

FIGS. 7 and 8 are SEM images of the final positive electrode active material in the shape of single particles of the Example.

## DETAILED DESCRIPTION

Hereinafter, example embodiments will be described in detail so that those of ordinary skill in the art can readily implement the example embodiments. However, this disclosure may be embodied in many different forms and is not construed as limited to the example embodiments set forth herein.

The terminology used herein describes example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises", "includes", or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope (TEM) image or a scanning electron microscope (SEM) image. Alternatively, it is possible to obtain an average particle diameter value by measuring using a dynamic light scattering (DLS) method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

### Method of Preparing Positive Electrode Active Material

A method of preparing a positive electrode active material includes: (i) mixing a nickel-based precursor and a first lithium raw material, and performing a first heat treatment on the nickel-based precursor and the first lithium raw material at about 500 °C to about 750 °C to prepare a first fired product, and (ii) mixing the first fired product and a second lithium raw material, and performing a second heat treatment on the first fired product and the second lithium raw material at about 650 °C to about 850 °C to prepare a positive electrode active material in the form of single particles including a lithium nickel-based composite oxide. A molar ratio ($L^1$) of lithium in the first lithium raw material to a total metal of the nickel-based precursor is about 0.2 to about 0.9, a molar ratio ($L^2$) of lithium in the second lithium raw material to a total metal excluding lithium in the first fired product is about 0.1 to about 0.8, and about $0.9 \leq L^1 + L^2 \leq$ about 1.1. Herein, the positive electrode active material can be expressed as a positive electrode active material for a rechargeable lithium battery or a nickel-based positive electrode active material.

The preparation method may be a no-washing method that does not include, i.e. excludes, a water washing process. In other words, the method may be a novel method of effectively reducing unreacted lithium on the surface of the positive electrode active material, and strengthening the surface structure without going through the process of washing the positive electrode active material or intermediate products in the process of preparing the positive electrode active material. According to some example embodiments, the washing process may be omitted, thereby reducing processing costs, and the synthesis paradigm of nickel-based positive electrode active materials can be simplified.

In addition, by dividing the lithium raw material into two or more portions, e.g., the first lithium raw material for the first fired product and the second lithium raw material for the final product, productivity can be improved by increasing a charging amount of raw materials into the reactor during firing. Furthermore, by dividing the lithium raw materials into the first lithium raw material and the second lithium raw material, and then adding the first and second lithium raw materials after firing, the challenge of raw materials agglomerating can be effectively alleviated, thereby increasing process yield and improving productivity.

According to the above method, it is advantageous to control the content relationship, such as by adjusting molar ratios of lithium in the second heat treatment process so that the final positive electrode active material includes an excessive amount of lithium, and adding coating raw materials, making it easier to modify the surface of the positive electrode active material and further strengthening the surface structure.

In addition, generally, when preparing a nickel-based positive active material in the form of single particles, a process of pulverizing the agglomerated particles to obtain a single particle shape is involved. However, according to the invention, the process can be simplified because a pulverizing process is not required, various process issues arising from reduced flowability of the powder during the pulverizing process can be resolved, and high-quality single particles of substantially uniform shape and size can be prepared.

The above method may allow control of residual lithium on the surface of the positive electrode active material prepared by the method to be about 2000 ppm or less, the shape and size of the single particles to be substantially uniform, the single particle surface to be substantially clean, and the Brunauer-Emmett-Teller (BET) specific surface area to be small, which may be advantageous for improving the electrode density and electrolyte impregnation speed.

In examples, the single particles may exist alone without a grain boundary within the particle, may be composed of one particle, and may be or include a monolith structure, a one body structure, or a non-agglomerated particle, in which particles are not agglomerated with each other but exist as an independent phase in terms of morphology, and may be expressed as a one body particle, single grain, for example, as a single crystal. The single particles may be alone, or single particles may be agglomerated together. For example, 2 to 10 single particles may be agglomerated and in contact with each other.

The method for preparing a positive electrode active material according to the invention includes adding the lithium raw material two or more times, by adding a first lithium raw material in process (i) and adding a second lithium raw material in process (ii). Herein, a molar ratio ($L^1$) of lithium in the first lithium raw material to a total metal of the nickel-based precursor is about 0.2 to about 0.9, for example about 0.3 to about 0.8, about 0.4 to about 0.7, about 0.5 to about 0.7, or about 0.5 to about 0.6. In addition, the molar ratio ($L^2$) of lithium in the second lithium raw material to a total metal excluding lithium in the first fired product is about 0.1 to about 0.8, for example, about 0.2 to about 0.7, about 0.3 to about 0.6, about 0.4 to about 0.6, or about 0.4 to about 0.5. A sum of $L^1 + L^2$ indicates a molar ratio of lithium to a total metal excluding lithium in the final positive electrode active material, and the range is about $0.9 \leq L^1 + L^2 \leq$ about 1.1, about $0.95 \leq L^1 + L^2 \leq$ about 1.05, about $0.9 \leq L^1 + L^2 \leq$ about 1.0, about $0.9 \leq L^1 + L^2 \leq$ about 0.995, or about $1.0 \leq L^1 + L^2 \leq$ about 1.1. In some embodiments, $L^1 > L^2$ may be satisfied, whereas in other embodiments, $L^1 \leq L^2$ may instead be satisfied. By appropriately adjusting $L^1$ and $L^2$ and appropriately controlling the heat treatment temperature, a nickel-based positive electrode active material that achieves high capacity and long lifecycle may be effectively obtained.

The nickel-based precursor may include, for example, a nickel-based hydroxide, a nickel-based oxide, or a combination thereof. For example, the nickel-based hydroxide may be synthesized through a coprecipitation reaction, and the nickel-based oxide may be synthesized by a method such as, e.g., calcining the nickel-based hydroxide in an oxidizing atmosphere.

For example, the nickel-based precursor may be represented by Chemical Formula 11 or Chemical Formula 12:

Chemical Formula 11:       $Ni_{x11}M^{11}_{y11}M^{12}_{z11}(OH)_2$

wherein, in Chemical Formula 11, $0.7 \leq x11 < 1$, $0 < y11 \leq 0.3$, $0 \leq z11 \leq 0.3$, $0.9 \leq x11 + y11 + z11 \leq 1.1$, and $M^{11}$ and $M^{12}$ each independently are or include one or more of Al, B, Ba, Ca, Ce, Co, Cr, Cu, Fe, Mg, Mn, Mo, Nb, Si, Sn, Sr, Ti, V, W, Y, Zn, and Zr.

For example, in Chemical Formula 11, $0.7 \leq x11 \leq 0.99$, $0.01 < y11 \leq 0.3$, $0 \leq z11 \leq 0.3$; $0.8 \leq x11 \leq 0.99$, $0.01 < y11 \leq 0.2$, $0 \leq z11 \leq 0.2$; $0.85 \leq x11 < 1$, $0 < y11 \leq 0.15$, $0 \leq z11 \leq 0.15$; or $0.9 \leq x11 < 1$, $0 < y11 \leq 0.1$, $0 \leq z11 \leq 0.1$.

Chemical Formula 12       $Ni_{x12}M^{13}_{y12}M^{14}_{z12}O_{2-b12}X_{b12}$

wherein, in Chemical Formula 12, $0.7 \leq x12 < 1$, $0 < y12 \leq 0.3$, $0 \leq z12 \leq 0.3$, $0.9 \leq x12 + y12 + z12 \leq 1.1$, $0 \leq b12 \leq 0.1$, $M^{13}$ and $M^{14}$ each independently are or include at least one of Al, B, Ba, Ca, Ce, Co, Cr, Cu, Fe, Mg, Mn, Mo, Nb, Si, Sn, Sr, Ti, V, W, Y, Zn, and Zr, and X is or includes at least one of F, P, and S.

For example, in Chemical Formula 12, $0.7 \leq x12 \leq 0.99$, $0.01 < y12 \leq 0.3$, $0 \leq z12 \leq 0.3$; $0.8 \leq x12 \leq 0.99$, $0.01 < y12 \leq 0.2$, $0 \leq z12 \leq 0.2$; $0.85 \leq x12 < 1$, $0 < y12 \leq 0.15$, $0 \leq z12 \leq 0.15$; or $0.9 \leq x12 < 1$, $0 < y12 \leq 0.1$, $0 \leq z12 \leq 0.1$.

According to some example embodiments, the nickel-based precursor may have the same or similar particle size as the final single particle, and may be or include a precursor in the form of secondary particles in which a plurality of primary particles may be agglomerated. For example, at least a portion or all of the primary particles may be needle-shaped. That is, according to some example embodiments, the method may include obtaining a positive electrode active material in the form of a single particle through an appropriate sintering process while using a precursor in the form of secondary particles having the same or similar particle size as the particle size of the single particle. This is different from conventional methods, which use a precursor in the form of single particles, and require a pulverizing process due to agglomeration occurring during the firing process. According to the invention, a pulverizing process is not required, and a single particle shape with improved agglomeration can be synthesized by minimizing an amount of lithium used in each stage of synthesis from the precursor to the fired product and the final product, so that synthesis can proceed under mild conditions, and single particles with uniform size and shape and clean surfaces can be obtained.

The average particle diameter ($D_{50}$) of the nickel-based precursor may be about 1 $\mu$m to about 6 $\mu$m, for example about 2 $\mu$m to about 6 $\mu$m, or about 2 $\mu$m to about 5 $\mu$m. When the precursor has a size within the ranges, as processability is improved, capacity may be increased. For example, when the precursor has too small a size, the precursor is difficult to disperse, which may deteriorate the processability, but when the size is too large, the capacity may be reduced. Herein, the average particle diameter ($D_{50}$) indicates a size of particles having a cumulative volume of 50 volume% in the particle size distribution that is obtained by measuring the size of about 20 particles at random from a scanning electron microscope (SEM) image.

For example, a difference between the average particle diameter ($D_{50}$) of the nickel-based precursor and the average particle diameter ($D_{50}$) of the final positive electrode active material in the form of single particles may be less than or equal to about 1 $\mu$m, or less than or equal to about 0.5 $\mu$m, for example, about 0 $\mu$m to about 1 $\mu$m, or about 0.01 $\mu$m to about 0.5 $\mu$m.

The nickel-based precursor may further include zirconium in addition to the nickel. In other words, the nickel-based precursor may be or include hydroxide or oxide including nickel and zirconium. In other words, the nickel-based precursor may be or include a zirconium-doped nickel-based precursor. Herein, the zirconium may be a type of dopant and, and may also play the role of a grain growth accelerator during the heat treatment. If (e.g., when) a zirconium-doped nickel-based precursor is used, the zirconium-doped nickel-based precursor may promote grain growth, making it possible to effectively synthesize single particles at a lower temperature than the conventional synthesis methods of single particles, and thereby reduce or suppress agglomeration of particles, thus improving productivity. Existing alkaline grain growth accelerators or fluxes had the problem of remaining after firing and acting as resistance within the positive electrode, thereby reducing the lifecycle thereof. However, if (e.g., when) a zirconium-doped nickel-based precursor is used as a raw material, impurities may not remain on the surface of the positive electrode active material particles, and lifespan characteristics may thus be improved. In some example embodiments, the zirconium-doped nickel-based precursor may be used to prepare a high nickel-based positive electrode active material in the form of single particles at a relatively low firing temperature in a simple method without adding an alkali-based grain growth accelerator or flux, and the like, thereby improving productivity and economy.

The first lithium raw material may be or include, for example, at least one of lithium hydroxide, lithium carbonate, lithium sulfate, lithium nitrate, or a combination thereof, and for example, the first lithium raw material may be or include anhydrous lithium hydroxide. The types of the first lithium raw material and the second lithium raw material may be the same or different, for example, the first lithium raw material and the second lithium raw material may be the same as each other.

If (e.g., when) anhydrous hydroxide lithium is used as the first and second lithium raw materials, a charged amount of said raw materials may be increased in the synthesis process of a positive electrode active material, improving hourly production but decreasing unnecessary gas and moisture generated during the heat treatment, and as a result improving processability and enhancing quality of the positive electrode active material. In addition, there may be no input of unnecessary 'heavy' substances such as, e.g., $H_2O$ and the like, increasing a heat treatment yield and improving productivity.

For example, the anhydrous lithium hydroxide (LiOH) may be prepared by drying hydrated lithium hydroxide ($LiOH \cdot H_2O$) with an average particle diameter ($D_{50}$) of about 400 $\mu$m to about 600 $\mu$m, and pulverizing the dried hydrated lithium hydroxide into an average particle diameter ($D_{50}$) of about 3 $\mu$m to about 30 $\mu$m. The anhydrous lithium hydroxide may not be pulverized before the drying, and may be pulverized once for about 1 minute after the drying. The drying may be, for example, performed under vacuum conditions within a temperature range of about 50 °C to about 200 °C for a period of about 0.5 to about 20 hours. The average particle diameter ($D_{50}$) of the hydrated lithium hydroxide, which is a starting material, may be, for example, about 450 $\mu$m to about 550 $\mu$m or about 480 $\mu$m to about 500 $\mu$m, and the obtained anhydrous lithium hydroxide may have an average particle diameter ($D_{50}$) of about 3 $\mu$m to about 25 $\mu$m or about 5 $\mu$m to about 20 $\mu$m.

The method of manufacturing the anhydrous lithium hydroxide may make it possible to readily obtain anhydrous lithium salt, maintain an optimal process condition, and reduce a conversion rate to $Li_2CO_3$ to about 5% or less, obtaining high-purity anhydrous lithium hydroxide. If hydrous lithium hydroxide were to be pulverized, because fluidity of the powder rapidly decreases, it may be generally difficult to perform an additional process. For example, when drying is performed after the pulverizing, the fine particles may be entangled with each other and tightly agglomerated by heat generated during the drying, which may require a re-pulverizing process, but the agglomerated particles may be more difficult to grind due to their high agglomeration strength in the re-pulverizing process. In addition, as the number of processes increases, the conversion rate to $Li_2CO_3$ also increases due to an increase in the specific surface area, which may result in failing to obtain high-quality anhydrous lithium hydroxide. However, the method of manufacturing anhydrous lithium hydroxide according to some example embodiments, in which the anhydrous lithium hydroxide is once pulverized into a specific size under a predetermined condition after the drying, is a simple process of obtaining high-quality anhydrous lithium hydroxide, and additional processes may be readily added thereto.

The first heat treatment is performed within a temperature range of about 500 °C to about 750 °C. When the first heat treatment is performed within the temperature range, a first fired product may have appropriately low crystallinity and a hexagonal crystal structure and a cubic crystal structure to secure a large number of lithium channels, which may increase reactivity with the second lithium raw material, and thus effectively promote particle growth. A positive electrode active material prepared by applying the temperature conditions may exhibit desired or improved surface characteristics, a single particle shape with a uniform shape and size, a low residual lithium content, and high pellet density. When the first heat treatment temperature is greater than about 750 °C, the first fired product may have a different crystal structure and different properties from the crystal structure and the properties of some example embodiments, and the fired product has relatively high crystallinity and less reactivity with lithium during the secondary firing, which may result in failing to obtain the desired high-quality single particles.

The first heat treatment may be performed, for example, at a temperature range of about 550 °C to about 750 °C, about 600 °C to about 750 °C, about 650 °C to about 750 °C, or about 700 °C to about 750 °C. For example, the first heat treatment temperature may be lower than the second heat treatment temperature described below. The first heat treatment may be performed for a period of about 6 to about 12 hours, or about 8 to about 12 hours, and may be performed in an oxidizing atmosphere. When the first heat treatment proceeds within any of the above temperature ranges for the above periods of time, a positive electrode active material in the form of single particles having desired or improved surface characteristics, high pellet density due to a uniform shape and size, and a low residual lithium content, may be effectively prepared.

In some example embodiments, when the nickel-based first lithium raw material is mixed, a zirconium raw material may be mixed together with the nickel-based first lithium raw material. Zirconium of the zirconium raw material may be a type of dopant, and may play a role of a grain growth accelerator. If (e.g., when) the zirconium raw material is added, the zirconium raw material may promote grain growth, making it possible to effectively synthesize single particles at a lower temperature than the conventional synthesis methods of single particles, which may reduce or suppress agglomeration of particles, thereby, improving productivity. Conventional alkali-based grain growth accelerators or fluxes present a challenge of remaining after firing and acting as resistance inside a positive electrode, thus deteriorating a lifecycle. However, the zirconium raw material would be a dopant of the positive electrode active material and would not remain on the positive electrode active material particle surface, thereby improving lifecycle characteristics. In some example embodiments, the zirconium raw material may be configured to effectively prepare a high nickel-based positive electrode active material in the form of single particles without adding alkali-based grain growth accelerators or fluxes, etc. at a relatively low firing temperature in a simple method, which may improve productivity and economy.

A zirconium content of the zirconium raw material may be about 0.01 mol% to about 1 mol%, for example about 0.01 mol% to about 0.9 mol%, about 0.05 mol% to about 0.7 mol%, about 0.1 mol% to about 0.5 mol%, or about 0.1 mol% to about 0.3 mol% based on 100 mol% of a total metal content of the nickel-based precursor and the zirconium of the zirconium raw material. In addition, a zirconium content of the zirconium raw material may be about 0.01 wt% to about 1 wt%, for example about 0.01 wt% to about 0.9 wt%, about 0.05 wt% to about 0.7 wt%, about 0.1 wt% to about 0.5 wt%, or about 0.1 wt% to about 0.3 wt% based on 100 wt% of a total metal of the nickel-based precursor and the zirconium of the zirconium raw material. When the zirconium content satisfies any of the above ranges, single particles of uniform size of about 1 $\mu$m to about 6 $\mu$m may be effectively prepared at low temperatures.

The zirconium raw material may be a compound including zirconium and may be or include, for example, zirconium oxide ($ZrO_2$).

The method of preparing a positive electrode active material according to some example embodiments may further include a pulverizing process after the first heat treatment. As used herein, the term "pulverizing" means, for example, grinding a powder with a size of 1 mm or less into microscale particles with a size of less than or equal to about 10 $\mu$m. "Pulverizing" may be distinguished from "crushing", which means, for example, breaking up a solid of size that is greater than or equal to about 10 mm into a powder of less than or equal to about 1 mm. Pulverizing may be carried out, for example, using a mild jet-mill or an air classifier mill (ACM).

The first fired product obtained through the first heat treatment may include lithium nickel-based composite oxide in the form of secondary particles formed by agglomerating a plurality of primary particles. The average particle diameter ($D_{50}$) of the secondary particles that constitute the first fired product may have the same or similar size as the single particles that constitute the final positive electrode active material, for example, about 1 $\mu$m to about 6 $\mu$m, or about 2 $\mu$m to about 5 $\mu$m. For example, a difference between the average particle diameter ($D_{50}$) of the first fired product and the average particle diameter ($D_{50}$) of the final positive electrode active material in the form of single particles may be less than or equal to about 1 $\mu$m, or may be less than or equal to about 0.5 $\mu$m, for example, about 0 $\mu$m to about 1 $\mu$m, or about 0.01 $\mu$m to about 0.5 $\mu$m.

For example, the lithium nickel-based composite oxide of the first fired product may have a hexagonal crystal structure and a cubic crystal structure. For example, the first fired product may include about 60% to about 95%, about 70% to about 95%, or about 75% to about 90% of the hexagonal crystal structure, and about 5% to about 40%, about 5% to about 30%, or about 10% to about 25% of the cubic crystal structure. In this case, the first sintered product may have high reactivity with the second lithium raw material and may be advantageous for growing into single particles of substantially uniform size in the range of about 1 $\mu$m to about 6 $\mu$m, and may effectively reduce residual lithium on the surface of the final positive electrode active material. The crystal structure of the first fired product may be analyzed and characterized, for example, by the X-ray diffraction (XRD) Rietveld Refinement method.

The second lithium raw material may be or include, for example, at least one of lithium hydroxide, lithium carbonate, lithium sulfate, lithium nitrate, or a combination thereof, for example, anhydrous lithium hydroxide. As discussed earlier, the types of the first lithium raw material and the second lithium raw material may be the same or different, for example, the first lithium raw material and the second lithium raw material may be the same as each other. In the method according to the invention, the molar ratio ($L^2$) of lithium in the second lithium raw material to a total metal excluding lithium in the first fired product is in the range of about 0.1 to about 0.8 as described above, and for example about 0.2 to about 0.7, about 0.3 to about 0.6, about 0.4 to about 0.6, or about 0.4 to about 0.5. $L^2$ may be appropriately adjusted to prepare a high-performance positive electrode active material in the form of single particles that may have high lithium usable capacity, low surface residual lithium content, and may be easier to crush.

In the method according to the invention, the second heat treatment is performed within a temperature range of about 650 °C to about 850 °C, for example, about 700 °C to about 830 °C, or about 750 °C to about 810 °C. In addition, the second heat treatment may proceed for a period of about 10 hours to about 16 hours, or for about 12 hours to about 16 hours, in an oxidizing atmosphere. When the second heat treatment proceeds under the above conditions, single particles with a uniform size in the range of about 1 $\mu$m to about 6 $\mu$m may be prepared, contributing to obtaining a positive electrode active material having high lithium usable capacity and a low residual lithium content on the surface.

According to some example embodiments, when the first fired product is mixed with the second lithium raw material, a coating raw material may also be mixed together with the first fired product and the second lithium raw material to enable coating the positive electrode active material particle surface in a simple method. The coating raw material may include, for example, one or more of Al, B, Co, Mg, V, Zn, and Zr. A content of the coating elements may vary based on types of elements, for example, about 0.01 wt% to about 5 wt% or about 0.05 wt% to about 3 wt% based on 100 wt% of total metal excluding lithium in the positive electrode active material. For example, the method of preparing a positive electrode active material may include mixing the first fired product with the second lithium raw material and the coating raw material, e.g. cobalt raw material, together, and then performing the secondary heat treatment on the mixture to provide a positive electrode active material with improved lifecycle characteristics. Herein, a content of cobalt as the coating element may be about 0.1 wt% to about 3 wt%, or about 0.5 wt% to about 2 wt% based on 100 wt% of the total metal excluding lithium in the positive electrode active material.

The method for preparing a positive electrode active material according to some example embodiments may further include a pulverizing process after the second heat treatment. The pulverizing may be carried out, for example, through a mild jet-mill or airflow grinder. Grinding productivity may be increased by applying mild pulverizing.

The prepared positive electrode active material includes lithium nickel-based composite oxide, and is in the form of single particles. The prepared positive electrode active material may exhibit a layered crystal structure, unlike the first fired product, which exhibits, for example, a hexagonal crystal structure and a cubic crystal structure. For example, the lithium nickel-based composite oxide may be represented by Chemical Formula 1:

Chemical Formula 1: $\quad\quad Li_{a1}Ni_{x1}M^1{}_{y1}M^2{}_{z1}O_{2-b1}X_{b1}$

wherein, in Chemical Formula 1, $0.8 \leq a1 \leq 1.2$, $0.7 \leq x1 < 1$, $0 < y1 \leq 0.3$, $0 \leq z1 \leq 0.3$, $0.9 \leq x1+y1+z1 \leq 1.1$, and $0 \leq b1 \leq 0.1$, $M^1$ and $M^2$ each independently are or include at least one of Al, B, Ba, Ca, Ce, Co, Cr, Cu, Fe, Mg, Mn, Mo, Nb, Si, Sn, Sr, Ti, V, W, Y, Zn, and Zr, and X is or includes at least one of F, P, and S.

As an example, the lithium nickel-based composite oxide may be represented by Chemical Formula 2 or Chemical Formula 3:

Chemical Formula 2: $Li_{a2}Ni_{x2}Co_{y2}M^3_{z2}O_{2-b2}X_{b2}$

wherein, in Chemical Formula 2, $0.9 \leq a2 \leq 1.2$, $0.7 \leq x2 < 1$, $0 < y2 \leq 0.3$, $0 \leq z2 \leq 0.3$, $0.9 \leq x2+y2+z2 \leq 1.1$, and $0 \leq b2 \leq 0.1$, $M^3$ is or includes at least one of Al, B, Ba, Ca, Ce, Cr, Cu, Fe, Mg, Mn, Mo, Nb, Si, Sn, Sr, Ti, V, W, Y, Zn, and Zr, and X is or includes at least one of F, P, S, or a combination thereof.

For example, in Chemical Formula 2, $0.8 \leq x2 \leq 0.99$, $0.01 \leq y2 \leq 0.2$, and $0 \leq z2 \leq 0.2$; or $0.9 \leq x2 \leq 0.99$, $0.01 \leq y2 \leq 0.1$, and $0 \leq z2 \leq 0.1$.

Chemical Formula 3: $Li_{a3}Ni_{x3}Co_{y3}M^4_{z3}M^5_{w3}O_{2-b3}X_{b3}$

wherein, in Chemical Formula 3, $0.9 \leq a3 \leq 1.2$, $0.7 \leq x3 \leq 0.98$, $0.01 \leq y3 \leq 0.29$, $0.01 \leq z3 \leq 0.29$, $0 \leq w3 \leq 0.29$, $0.9 \leq x3+y3+z3+w3 \leq 1.1$, and $0 \leq b3 \leq 0.1$, $M^4$ is or includes at least one of Al, Mn, or a combination thereof, $M^5$ is or includes at least one of B, Ba, Ca, Ce, Cr, Cu, Fe, Mg, Mo, Nb, Si, Sn, Sr, Ti, V, W, Y, Zn, and Zr, and X is or includes at least one of F, P, S, or a combination thereof.

For example, in Chemical Formula 3 $0.8 \leq x3 \leq 0.98$, $0.01 \leq y3 \leq 0.19$, $0.01 \leq z3 \leq 0.19$, and $0 \leq w3 \leq 0.19$; $0.9 \leq x3 \leq 0.98$, $0.01 \leq y3 \leq 0.09$, $0.01 \leq z3 \leq 0.09$, and $0 \leq w3 \leq 0.09$.

Production of such a high nickel-based positive electrode active material, as described above, may require a washing process, because an excessive amount of residual lithium may be generated on the particle surface during the synthesis process. The washing process may remove a lithium compound alone such as $Li_2CO_3$, LiOH, and the like, from the surface of positive electrode active material particles, but may also remove active lithium inside the positive electrode active material, which may change a crystal structure or cause a phase change as well as decrease reversible capacity, and thereby deteriorate performance. For example, lithium may be eluted and changed from lithium-nickel-oxides and the like to nickel-oxides and the like, for example, to form NiO, and accordingly, a type of reduction reaction may occur in which the oxidation number of Ni decreases from +3 to +2. The compounds such as NiO and the like may not be converted into lithium-containing compounds, and may thus promote a side reaction of the positive electrode active material particle surface with an electrolyte, as well as reduce reversible capacity, thereby, deteriorating overall performance. In order to overcome this challenge, after the washing process, a process of restoring the deteriorated surface through additional compensation of lithium may be performed, but another challenge of causing an additional side reaction and increasing a processing cost may occur.

In examples, the novel method of preparing the positive electrode active material according to some example embodiments may omit the washing process, and may thus overcome the performance degradation challenge due to the washing, and may also decrease a residual lithium content on the surface to about 2000 ppm or less, preparing a positive electrode active material with desired or improved surface characteristics. The residual lithium content on the surface of the positive electrode active material may be, for example, less than or equal to about 2000 ppm, less than or equal to about 1900 ppm, or less than or equal to about 1800 ppm.

The average particle diameter ($D_{50}$) of single particles of the manufactured positive electrode active material may be about 1 μm to about 6 μm, or about 2 μm to about 5 μm. In addition, ($D_{90}$-$D_{10}$)/$D_{10}$ (the standard deviation around the mean value or the span) of the single particles may be less than or equal to about 1.2. The average particle diameter ($D_{50}$) of the single particles indicates a size of particles having a cumulative volume of 50 volume% in the particle size distribution that is obtained by measuring the size of about 20 particles chosen at random from a SEM image. $D_{90}$ is a particle size at a cumulative volume of about 90 volume% in the particle distribution, and $D_{10}$ is a particle size at a cumulative volume of about 10 volume%.

In addition, the positive electrode active material may exhibit a low specific surface area and, for example, a BET specific surface area of the positive electrode active material may be about 0.5 to about 1.0 $m^2/g$, or about 0.6 to about 0.8 $m^2/g$.

The positive electrode active material may exhibit a low specific surface area and have a clean surface, and may thus have a high pellet density. For example, the pellet density of the positive electrode active material may be about 2.7 to about 3.3 g/cc, or about 2.8 to about 3.4 g/cc. A rechargeable lithium battery, to which such a positive electrode active material is applied, may achieve a high energy density. The pellet density may be measured in the following method. About 3g of the positive electrode active material is weighed, added to a mold (area: about 1.298 $cm^2$), and a mold bar slowly inserted into a mold main body. The mold set is placed in a hydraulic press and pressurized at about 3 tons for about 30 seconds to measure a height and thus pellet density.

In addition, the positive electrode active material may have a tap density of about 1.5 g/cc to about 2.2 g/cc, for example about 1.7 g/cc to about 2.0 g/cc. The tap density may be, for example, measured by using a tap density measuring device (TAP-2S, Logan Instruments Corp.), for example, by adding about 50 cc of the positive electrode active material powder to a 100 cc-mass cylinder, repeatedly tapping (about 1000 times) the positive electrode active material powder by dropping the cylinder from a height of about 3 mm per second, and dividing the mass by a volume.

The positive electrode active material may have a ratio of peak intensity of a (003) plane to that of a (104) plane of $I_{(003)}/I_{(104)}$ in a range that is greater than about 1.25, for example greater than or equal to about 1.30, or greater than or equal to about 1.40, in X-ray diffraction analysis.

In some example embodiments, the positive electrode active material obtained through the second heat treatment may be mixed with a coating raw material, and further heat-treated a third time. Through this, desired coating may proceed on the surface of the positive electrode active material by a simple method. The coating raw material may include, for example, one or more of Al, B, Co, Mg, V, Zn, and Zr. Herein, a content of the coating elements is not particularly limited but may be, for example, about 0.01 wt% to about 5 wt% or about 0.05 wt% to about 3 wt% based on 100 wt% of the total metal excluding lithium in the final positive electrode active material. For example, the method for preparing a positive electrode active material according to some example embodiments may include mixing the positive electrode active material obtained through the second heat treatment with a boron raw material, and performing a third heat treatment within a temperature range of about 250 °C to about 450 °C for a period of about 2 hours to about 8 hours, through which a positive electrode active material with improved lifecycle characteristics may be prepared. Herein, a boron content may be about 0.01 wt% to about 0.5 wt% or about 0.05 wt% to about 0.3 wt% based on 100 wt% of the total metal excluding lithium in the final positive electrode active material.

**Positive Electrode**

The present invention also provides a positive electrode for a rechargeable lithium battery including the aforementioned positive electrode active material. The positive electrode includes a positive electrode current collector and a positive electrode active material layer on the positive electrode current collector, the positive electrode active material layer being the aforementioned positive electrode active material. The positive electrode active material layer may further include other types of positive electrode active materials in addition to the aforementioned positive electrode active material, and may optionally further include a binder, a conductive material, or a combination thereof.

Binder

The binder may improve the binding properties of positive electrode active material particles with one another and with a current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

Conductive Material

The conductive material may be included to provide electrode conductivity, and any electrically conductive material may be a conductive material unless the electrically conductive material causes a chemical change in the battery. Examples of the conductive material may include a carbon-based material such as at least one of natural graphite, artificial graphite, carbon black, acetylene black, ketjen black, a carbon fiber, a carbon nanofiber, a carbon nanotube, and/or the like; a metal-based material of a metal powder or a metal fiber including at least one of copper, nickel, aluminium, silver, and/or the like; a conductive polymer such as a polyphenylene derivative; or a mixture thereof.

The content of each of the binder and the conductive material may be about 0.5 wt% to about 5 wt% based on 100 wt% of the positive electrode active material layer.

The positive electrode current collector may include Al, but is not limited thereto.

The positive electrode according to some example embodiments may achieve high mixture density. For example, a density of the positive electrode active material layer may be about 3.35 to about 3.85 g/cc or about 3.45 to about 3.75 g/cc. The density of the positive electrode active material layer refers to the ratio of the weight to the volume of the pressed positive active material layer. The density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume. The positive electrode active material according to some example embodiments may be advantageous to achieve the positive electrode densities, and a positive electrode, which satisfy the positive electrode density ranges, and may be appropriate for achieving a high-capacity and high-energy density rechargeable lithium battery.

## Rechargeable Lithium Battery

The present invention further provides a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

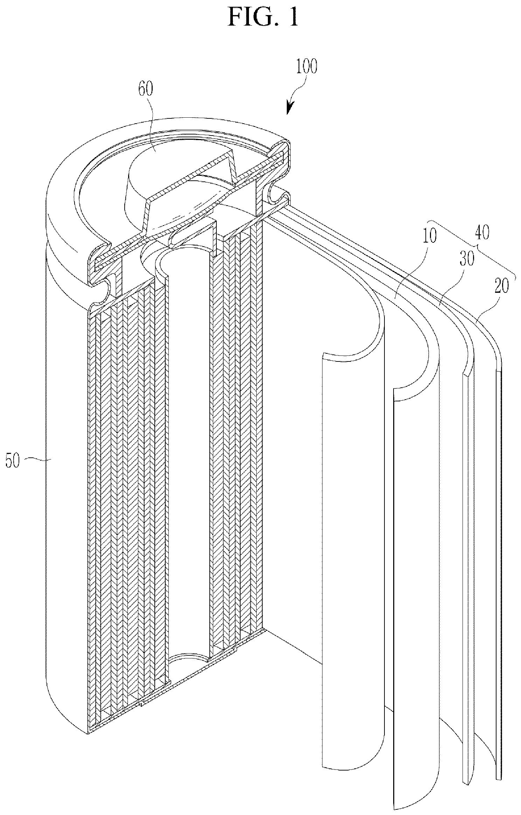

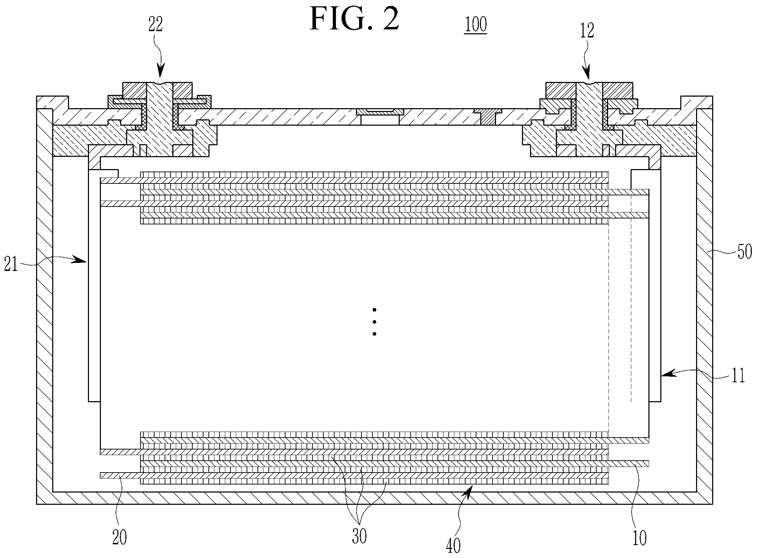

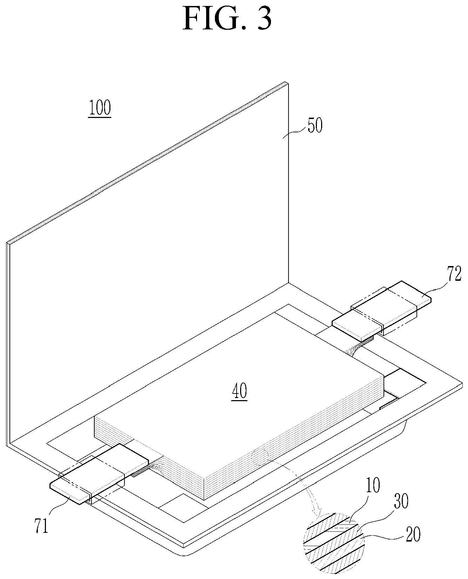

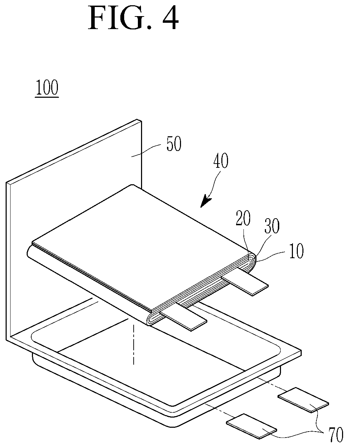

The rechargeable lithium battery may be classified into cylindrical, prismatic, pouch, coin, etc. depending on the shape. FIGS. 1 to 4 are schematic views illustrating the rechargeable lithium battery according to some example embodiments, where FIG. 1 illustrates a cylindrical battery, FIG. 2 illustrates a prismatic battery, and FIGS. 3 and 4 each illustrate a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

## Negative Electrode

The negative electrode may include a current collector and a negative electrode active material layer on the current collector, and the negative electrode active material layer may further include a negative electrode active material, a binder, a conductive material, or a combination thereof.

## Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, $SnO_2$, a Sn alloy, or a combination thereof.

The silicon-carbon composite may be or include a composite of silicon and amorphous carbon. An average particle diameter ($D_{50}$) of the silicon-carbon composite particles may be, for example, about 0.5 $\mu$m to about 20 $\mu$m. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may be present as silicon alone, in the form of a silicon alloy, or in an oxidized form. The oxidized form of silicon may be represented by $SiO_x$ ($0<x\leq2$). For example, the atomic content ratio of Si:O, which indicates a degree of oxidation, may be about 99:1 to about 33:67. As used herein, when a definition is not otherwise provided, an average particle diameter ($D_{50}$) indicates a particle where an accumulated volume is about 50 volume% in a particle distribution.

The Si-based negative electrode active material, or Sn-based negative electrode active material, may be mixed with the carbon-based negative electrode active material. When the Si-based negative electrode active material or Sn-based negative electrode active material and the carbon-based negative electrode active material are mixed, the mixing ratio may be a weight ratio of about 1:99 to about 90:10.

Binder

The binder may be configured to adhere the negative electrode active material particles to each other, and also to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

When an aqueous binder is used as the negative electrode binder, a cellulose-based compound configured to impart viscosity may be further included. As the cellulose-based compound, one or more of carboxymethyl cellulose, hydroxypropylmethyl cellulose, methyl cellulose, or alkali metal salts thereof, may be mixed and used. The alkali metal may be or include at least one of Na, K, or Li.

The dry binder may be or include a polymer material capable of being in the form of fiber, and may be or include, for example, at least one of polytetrafluoroethylene, polyvinylidene fluoride, a polyvinylidene fluoride-hexafluoropropylene copolymer, polyethylene oxide, and/or a combination thereof.

Conductive Material

The conductive material may be included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminium, silver, and the like; a conductive polymer such as a polyphenylene derivative; and/or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

**Electrolyte**

For example, the electrolyte for a rechargeable lithium battery may be an electrolyte solution, which may include a non-aqueous organic solvent and a lithium salt.

The non-aqueous organic solvent may constitute a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include at least one of ethanol, isopropyl alcohol, and/or the like and the aprotic solvent may include at least one of nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types of solvents, and when two or more types of solvents are used in a mixture, a mixing ratio may be appropriately adjusted according to the desired battery performance, which may be known to those working in the field.

When using a carbonate-based solvent, a cyclic carbonate and a chain carbonate may be mixed, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include at least one of vinyl ethylene carbonate, vinylene carbonate, or an ethylene carbonate-based compound to improve battery lifecycle.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_3)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has a desired or appropriate ionic conductivity and viscosity, and thus desired or improved performance can be achieved and lithium ions can move effectively.

**Separator**

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON™), and/or a copolymer or mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Examples and comparative examples of the present disclosure are described below. However, the following examples are only examples of the present disclosure, and the present disclosure is not limited to the following examples.

## Examples

Preparation of Positive Electrode Active Material

Nickel-based hydroxide $Ni_{0.94}CO_{0.04}Mn_{0.02}(OH)_2$ with an average particle diameter ($D_{50}$) of about 3 $\mu$m, anhydrous lithium hydroxide as a first lithium raw material, and $ZrO_2$ were mixed and then, subjected to a first heat treatment at 750 °C for 12 hours. Herein, the first lithium raw material was mixed so that a molar ratio ($L^1$) of lithium to a total metal of the nickel-based hydroxide was 0.6. In addition, $ZrO_2$ was mixed so that Zr was included in an amount of 0.125 wt% relative to 100 wt% of a sum of total metal of the nickel-based hydroxide and Zr of $ZrO_2$.

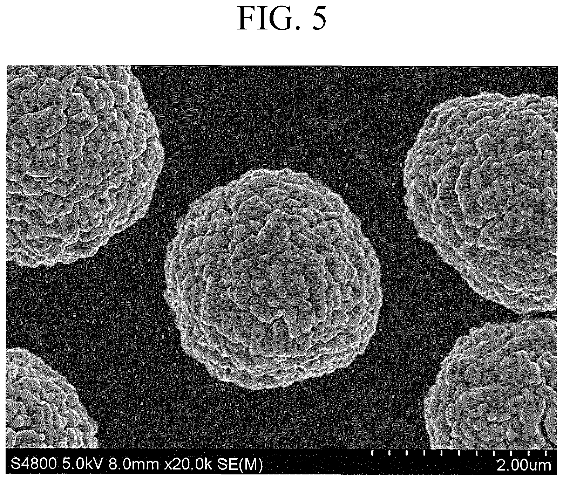

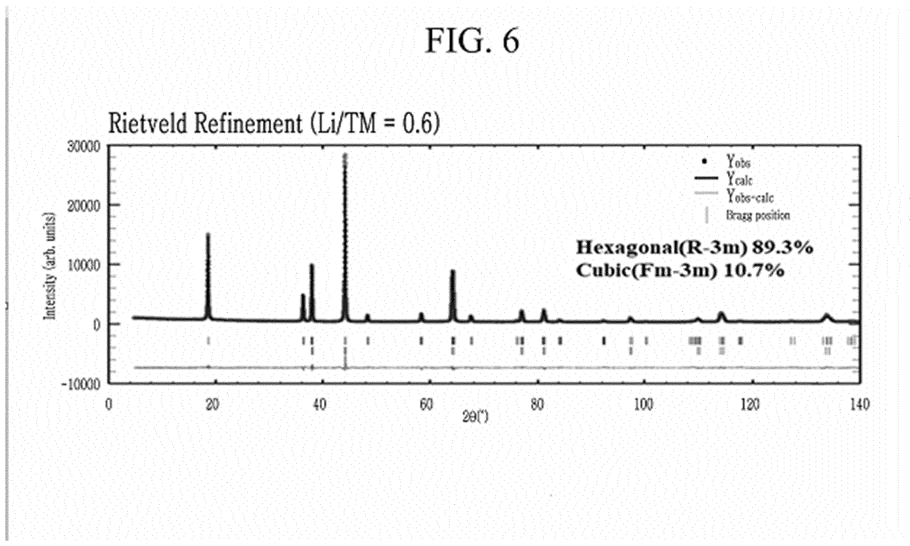

An SEM image of a first fired product obtained through the first heat treatment is shown in FIG. 5, and its XRD Rietveld Refinement result is shown in FIG. 6. Referring to FIG. 5, the first fired product was in a form of secondary particles, having a size of about 2 $\mu$m to 3 $\mu$m, formed by agglomerating a plurality of primary particles. Referring to FIG. 6, the first fired product was confirmed to have 89.3% of a hexagonal crystal structure and 10.7% of a cubic crystal structure.

The first fired product, anhydrous lithium hydroxide as a second lithium raw material, and cobalt oxide as a coating raw material were mixed, and secondarily heat-treated at 780 °C for 16 hours. Herein, a molar ratio ($L^2$) of lithium in the second lithium raw material to the total metal excluding lithium in the first fired product was set to be 0.45, and also a cobalt content was designed to be 2.0 wt% based on 100 wt% of the total metal excluding lithium in the positive electrode active material.

After the second heat treatment, pulverization was performed using an air flow pulverization method to obtain a positive electrode active material in the form of single particles.

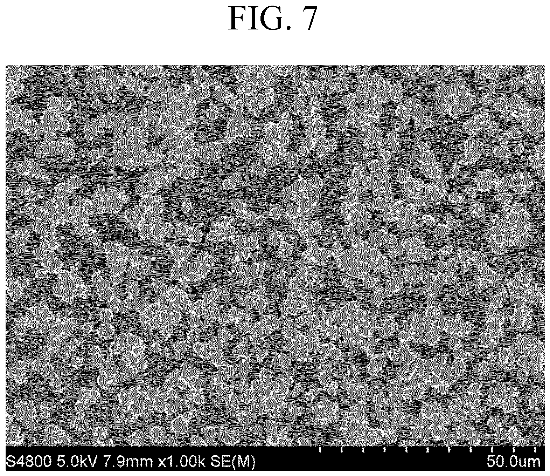

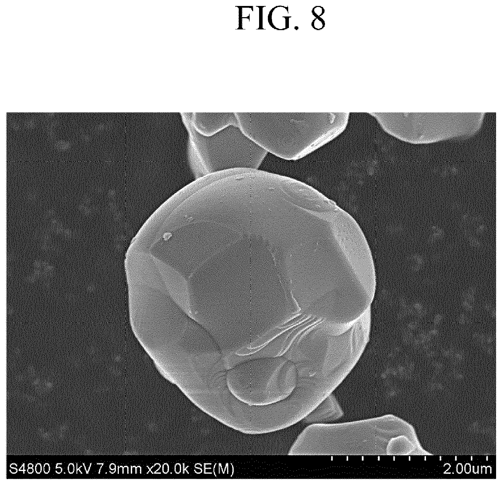

SEM images of the final positive electrode active material in the form of single particles are shown in FIGS. 7 and 8. Referring to FIGS. 7 and 8, the positive electrode active material was confirmed to be in the form of single particles with a substantially uniform particle size and a clean surface. In addition, from XRD Rietveld Refinement analysis of the final positive electrode active material, the positive electrode active material was confirmed to have a hexagonal crystal structure of 100%.

## Residual Lithium and XRD Analysis

The first fired product and the final positive electrode active material of the example were analyzed with respect to a content of residual lithium through a pH titration method, and an XRD analysis was performed to obtain a full width at half maximum (FWHM) on a (003) plane and a (104) plane, and a ratio of peak intensity of the (003) plane to that of the (104) plane; the results are shown in Table 1.

Table 1:

|  | First fired product | Final positive electrode active material |
|---|---|---|
| LiOH (wt%) | 0.190 | 0.388 |
| $Li_2CO_3$ (wt%) | 0.312 | 0.308 |

(continued)

|  | First fired product | Final positive electrode active material |
|---|---|---|
| Residual Li (ppm) | 1135 | 1704 |
| $FWHM_{(003)}$ | - | 0.127 |
| $FWHM_{(104)}$ | - | 0.139 |
| $I_{(003)}/I_{(104)}$ | 0.493 | 1.433 |

Referring to Table 1, in the final positive electrode active material, a content of the residual lithium was confirmed to be about 1704 ppm. In this Example, even though the high nickel-based positive electrode active material was synthesized without a washing process, the final positive electrode active material exhibited a low residual lithium content.

In addition, referring to Table 1, the final positive electrode active material exhibited a $I_{(003)}/I_{(104)}$ ratio of 1.433 in the XRD analysis.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the scope of the appended claims.

Embodiments are set out in the following clauses:

Clause 1. A method of preparing a positive electrode active material, the method comprising: (i) mixing a nickel-based precursor and a first lithium raw material, and performing a first heat treatment on the mixed nickel-based precursor and first lithium raw material at a temperature in a range of 500 °C to 750 °C to prepare a first fired product; and (ii) mixing the first fired product and a second lithium raw material, and performing a second heat treatment on the mixed first fired product and second lithium raw material at a temperature in a range of 650 °C to 850 °C to prepare a positive electrode active material that comprises single particles including a lithium nickel-based composite oxide, wherein: (a) a molar ratio ($L^1$) of lithium in the first lithium raw material to a total metal of the nickel-based precursor is 0.2 to 0.9, (b) a molar ratio ($L^2$) of lithium in the second lithium raw material to a total metal excluding lithium in the first fired product is 0.1 to 0.8, and (c) $0.9 \leq L^1+L^2 \leq 1.1$.

Clause 2. The method of Clause 1, wherein $L^1$ is 0.4 to 0.7, and $L^2$ is 0.3 to 0.6.

Clause 3. The method of Clause 1 or Clause 2, wherein $L^1 > L^2$.

Clause 4. The method of Clause 1 or Clause 2, wherein $L^1 \leq L^2$.

Clause 5. The method of any preceding Clause, wherein the nickel-based precursor is represented by Chemical Formula 11 or Chemical Formula 12:

$$\text{Chemical Formula 11} \qquad Ni_{x11}M^{11}_{y11}M^{12}_{z11}(OH)2$$

wherein, in Chemical Formula 11, $0.7 \leq x11 < 1$, $0 < y11 \leq 0.3$, $0 \leq z11 \leq 0.3$, $0.9 \leq x11+y11+z11 \leq 1.1$, and $M^{11}$ and $M^{12}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr,

$$\text{Chemical Formula 12} \qquad Ni_{x12}M^{13}_{y12}M^{14}_{z12}O_{2-b12}X_{b12}$$

wherein, in Chemical Formula 12, $0.7 \leq x12 < 1$, $0 < y12 \leq 0.3$, $0 \leq z12 \leq 0.3$, $0.9 \leq x12+y12+z12 \leq 1.1$, $M^{13}$ and $M^{14}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

Clause 6. The method of any preceding Clause, wherein: the nickel-based precursor comprises secondary particles formed by agglomerating a plurality of primary particles, and an average particle diameter ($D_{50}$) of the secondary particles is 1 μm to 6 μm, and a difference between the average particle diameter ($D_{50}$) of the secondary particles in the nickel-based precursor and an average particle diameter ($D_{50}$) of the single particles in the positive electrode active material is less than or equal to 1 μm.

Clause 7. The method of any preceding Clause, wherein the first lithium raw material and the second lithium raw material comprise anhydrous lithium hydroxide.

Clause 8. The method of any preceding Clause, wherein: the first heat treatment is performed at a temperature in a range of 550 °C to 750 °C for a period of 6 hours to 12 hours in an oxidizing atmosphere, and the first heat treatment temperature is lower than the second heat treatment temperature.

Clause 9. The method of any preceding Clause, wherein: mixing the nickel-based precursor and the first lithium raw material further comprises mixing zirconium raw material, and a zirconium content of the zirconium raw material is 0.01 mol% to 1 mol% based on 100 mol% of a total metal content of the nickel-based precursor and the zirconium of the zirconium raw material.

Clause 10. The method of any preceding Clause, wherein: the first fired product comprises secondary particles formed by agglomerating a plurality of primary particles, and an average particle diameter ($D_{50}$) of the secondary particles is 1 μm to 6 μm.

Clause 11. The method of any preceding Clause, wherein: the first fired product comprises a lithium nickel-based composite oxide, and the lithium nickel-based composite oxide comprises 60% to 95% of a hexagonal crystal structure and 5% to 40% of a cubic crystal structure.

Clause 12. The method of any preceding Clause, wherein the second heat treatment is performed at a temperature in a range of 750 °C to 810 °C for a period of 10 hours to 16 hours in an oxidizing atmosphere.

Clause 13. The method of any preceding Clause, wherein: mixing the first fired product and the second lithium raw material further comprises mixing a coating raw material, and the coating raw material comprises one or more of Al, B, Co, Mg, V, Zn, and Zr.

Clause 14. The method of any preceding Clause, wherein the method does not include washing the positive electrode active material with water.

Clause 15. The method of any preceding Clause, wherein the prepared positive electrode active material is represented by Chemical Formula 1:

$$\text{Chemical Formula 1} \qquad Li_{a1}Ni_{x1}M^1_{y1}M^2_{z1}O_{2-b1}X_{b1}$$

wherein, in Chemical Formula 1, $0.8 \leq a1 \leq 1.2$, $0.7 \leq x1 < 1$, $0 < y1 \leq 0.3$, $0 \leq z1 \leq 0.3$, $0.9 \leq x1+y1+z1 \leq 1.1$, and $0 \leq b1 \leq 0.1$, $M^1$ and $M^2$ each independently comprise at least one of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

Clause 16. The method of any preceding Clause, wherein an average particle diameter ($D_{50}$) of the single particles of the prepared positive electrode active material is 1 μm to 6 μm, a BET specific surface area is 0.5 to 1.0 m²/g, and a residual lithium content on surface thereof is less than or equal to 2000 ppm.

Clause 17. The method of any preceding Clause, wherein a pellet density of the prepared positive electrode active material is 2.7 g/cc to 3.3 g/cc, and the tap density of the prepared positive electrode active material is 1.5 g/cc to 2.2 g/cc.

Clause 18. The method of any preceding Clause, wherein the prepared positive electrode active material has a ratio of the peak intensity of a (003) plane to a peak intensity of a (104) plane that is greater than or equal to 1.25 in X-ray diffraction analysis.

Clause 19. The method of any preceding Clause, further comprising: (iii) mixing the prepared positive electrode active material and a coating raw material, and subjecting the prepared positive electrode active material and the coating raw material to a third heat treatment, the coating raw material comprising one or more of Al, B, Co, Mg, V, Zn, and Zr.

Clause 20. A rechargeable lithium battery, comprising: (a) a positive electrode including the positive electrode active material prepared according to the method of any of Clauses 1 to 19, (b) a negative electrode, and (c) an electrolyte.

Description of Symbols

| 100: | rechargeable lithium battery | 10: | positive electrode |
|------|------------------------------|-----|--------------------|
| 11:  | positive electrode lead tab  | 12: | positive electrode terminal |
| 20:  | negative electrode           | 21: | negative electrode lead tab |
| 22:  | negative electrode terminal  | 30: | separator |
| 40:  | electrode assembly           | 50: | case |
| 60:  | sealing member               | 70: | electrode tab |
| 71:  | positive electrode tab       | 72: | negative electrode tab |

**Claims**

1. A method of preparing a positive electrode active material, the method comprising:

(i) mixing a nickel-based precursor and a first lithium raw material, and performing a first heat treatment on the mixed nickel-based precursor and first lithium raw material at a temperature in a range of 500 °C to 750 °C to prepare a first fired product, and

(ii) mixing the first fired product and a second lithium raw material, and performing a second heat treatment on the mixed first fired product and second lithium raw material at a temperature in a range of 650 °C to 850 °C to prepare a positive electrode active material that comprises single particles including a lithium nickel-based composite oxide,

wherein:

a molar ratio ($L^1$) of lithium in the first lithium raw material to a total metal of the nickel-based precursor is 0.2 to 0.9, a molar ratio ($L^2$) of lithium in the second lithium raw material to a total metal excluding lithium in the first fired product is 0.1 to 0.8, and

$$0.9 \leq L^1 + L^2 \leq 1.1.$$

2. The method as claimed in claim 1, wherein:

$L^1$ is 0.4 to 0.7, and $L^2$ is 0.3 to 0.6,
optionally wherein either (a) $L^1 > L^2$ or (b) $L^1 \leq L^2$.

3. The method as claimed in claim 1 or claim 2, wherein:
the nickel-based precursor is represented by Chemical Formula 11 or Chemical Formula 12:

Chemical Formula 11    $Ni_{x11}M^{11}_{y11}M^{12}_{z11}(OH)2$

wherein, in Chemical Formula 11, $0.7 \leq x11 < 1$, $0 < y11 \leq 0.3$, $0 \leq z11 \leq 0.3$, $0.9 \leq x11 + y11 + z11 \leq 1.1$, and $M^{11}$ and $M^{12}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr,

Chemical Formula 12    $Ni_{x12}M^{13}_{y12}M^{14}_{z12}O_{2-b12}X_{b12}$

wherein, in Chemical Formula 12, $0.7 \leq x12 < 1$, $0 < y12 \leq 0.3$, $0 \leq z12 \leq 0.3$, $0.9 \leq x12 + y12 + z12 \leq 1.1$, $0 \leq b12 \leq 0.1$, $M^{13}$ and $M^{14}$ each independently comprise one or more of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

4. The method as claimed in any preceding claim, wherein:

the nickel-based precursor comprises secondary particles formed by agglomerating a plurality of primary particles, and an average particle diameter ($D_{50}$) of the secondary particles is 1 $\mu$m to 6 $\mu$m, and a difference between the average particle diameter ($D_{50}$) of the secondary particles in the nickel-based precursor and an average particle diameter ($D_{50}$) of the single particles in the positive electrode active material is less than or equal to 1 $\mu$m.

5. The method as claimed in any preceding claim, wherein:
the first lithium raw material and the second lithium raw material comprise anhydrous lithium hydroxide.

6. The method as claimed in any preceding claim, wherein:

the first heat treatment is performed at a temperature in a range of 550 °C to 750 °C for a period of 6 hours to 12 hours in an oxidizing atmosphere, and
the first heat treatment temperature is lower than the second heat treatment temperature.

7. The method as claimed in any preceding claim, wherein:

mixing the nickel-based precursor and the first lithium raw material further comprises mixing zirconium raw material, and

a zirconium content of the zirconium raw material is 0.01 wt% to 1 wt% based on 100 wt% of a total metal content of the nickel-based precursor and the zirconium of the zirconium raw material.

8. The method as claimed in any preceding claim, wherein:

   (a) the first fired product comprises secondary particles formed by agglomerating a plurality of primary particles, and
   an average particle diameter ($D_{50}$) of the secondary particles is 1 $\mu$m to 6 $\mu$m, and/or
   (b) the first fired product comprises a lithium nickel-based composite oxide, and
   the lithium nickel-based composite oxide comprises 60 vol% to 95 vol% of a hexagonal crystal structure and 5 vol% to 40 vol% of a cubic crystal structure.

9. The method as claimed in any preceding claim, wherein:
   the second heat treatment is performed at a temperature in a range of 750 °C to 810 °C for a period of 10 hours to 16 hours in an oxidizing atmosphere.

10. The method as claimed in any preceding claim, wherein:

   mixing the first fired product and the second lithium raw material further comprises mixing a coating raw material, and
   the coating raw material comprises one or more of Al, B, Co, Mg, V, Zn, and Zr.

11. The method as claimed in any preceding claim, wherein:

   (a) the method does not include washing the positive electrode active material with water, and/or
   (b) the method further comprises (iii) mixing the prepared positive electrode active material and a coating raw material, and

      subjecting the prepared positive electrode active material and the coating raw material to a third heat treatment,
      the coating raw material comprising one or more of Al, B, Co, Mg, V, Zn, and Zr.

12. The method as claimed in any preceding claim, wherein:
   the prepared positive electrode active material is represented by Chemical Formula 1:

   $$\underline{\text{Chemical Formula 1}} \qquad Li_{a1}Ni_{x1}M^1_{y1}M^2_{z1}O_{2-b1}X_{b1}$$

   wherein, in Chemical Formula 1, $0.8 \leq a1 \leq 1.2$, $0.7 \leq x1 < 1$, $0 < y1 \leq 0.3$, $0 \leq z1 \leq 0.3$, $0.9 \leq x1+y1+z1 \leq 1.1$, and $0 \leq b1 \leq 0.1$, $M^1$ and $M^2$ each independently comprise at least one of Al, B, Ba, Ca, Ce, Co, Cr, Cu, Fe, Mg, Mn, Mo, Nb, Si, Sn, Sr, Ti, V, W, Y, Zn, and Zr, and X comprises at least one of F, P, and S.

13. The method as claimed in any preceding claim, wherein:

   (a) an average particle diameter ($D_{50}$) of the single particles of the prepared positive electrode active material is 1 $\mu$m to 6 $\mu$m, a BET specific surface area is 0.5 to 1.0 m$^2$/g, and a residual lithium content on surface thereof is less than or equal to 2000 ppm, and/or
   (b) a pellet density of the prepared positive electrode active material is 2.7 g/cc to 3.3 g/cc, and the tap density of the prepared positive electrode active material is 1.5 g/cc to 2.2 g/cc, and/or
   (c) the prepared positive electrode active material has a ratio of the peak intensity of a (003) plane to a peak intensity of a (104) plane that is greater than or equal to 1.25 in X-ray diffraction analysis.

14. A positive electrode for a rechargeable lithium battery, comprising:

   a positive electrode current collector; and
   the positive electrode active material prepared according to the method as claimed in any of claims 1 to 13 as a layer on the positive electrode current collector.

**15.** A rechargeable lithium battery, comprising:

the positive electrode claimed in claim 14,
a negative electrode, and
an electrolyte.

# FIG. 1

# FIG. 2

# FIG. 3

# FIG. 4

FIG. 5

S4800 5.0kV 8.0mm x20.0k SE(M)                    2.00um

## FIG. 6

Rietveld Refinement (Li/TM = 0.6)

Hexagonal(R-3m) 89.3%
Cubic(Fm-3m) 10.7%

EP 4 624 423 A1

FIG. 7

S4800 5.0kV 7.9mm x1.00k SE(M)    50.0um

# FIG. 8

S4800 5.0kV 7.9mm x20.0k SE(M)          2.00um

Europäisches
Patentamt

European
Patent Office

Office européen
des brevets

# EUROPEAN SEARCH REPORT

**Application Number**

EP 25 16 2211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 028 372 B (UMICORE NV; UMICORE KOREA LTD) 15 June 2021 (2021-06-15) * paragraph [0035] - paragraph [0038] * * paragraph [0077] - paragraph [0078]; claims; examples * | 1-15 | INV. C01G53/05 C01G53/42 C01G53/506 H01M4/00 |
| X | US 2022/388865 A1 (KIM SOOHYEON [KR] ET AL) 8 December 2022 (2022-12-08) * paragraph [0013] - paragraph [0030] * * paragraph [0081] - paragraphs [0088], [0098] * * paragraphs [0120], [0130] - paragraph [0138]; claims; examples * | 1-15 | |
| X | CN 117 334 860 A (BEITERUI JIANGSU NEW MATERIAL TECH CO LTD) 2 January 2024 (2024-01-02) | 14,15 | |
| A | * paragraph [0202]; claims; examples * | 1-13 | |

**TECHNICAL FIELDS SEARCHED (IPC)**

C01G
H01M

The present search report has been drawn up for all claims

| Place of search | Date of completion of the search | Examiner |
|---|---|---|
| Munich | 1 August 2025 | Doslik, Natasa |

EPO FORM 1503 03.82 (P04C01)

**ANNEX TO THE EUROPEAN SEARCH REPORT
ON EUROPEAN PATENT APPLICATION NO.**

EP 25 16 2211

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2025

| Patent document cited in search report | | Publication date | Patent family member(s) | | Publication date |
|---|---|---|---|---|---|
| CN 108028372 | B | 15-06-2021 | CN | 108028372 A | 11-05-2018 |
| | | | EP | 3347935 A1 | 18-07-2018 |
| | | | HU | E053899 T2 | 28-07-2021 |
| | | | JP | 6745081 B2 | 26-08-2020 |
| | | | JP | 2018533166 A | 08-11-2018 |
| | | | KR | 20180039177 A | 17-04-2018 |
| | | | KR | 20200021564 A | 28-02-2020 |
| | | | PL | 3347935 T3 | 12-07-2021 |
| | | | TW | 201717458 A | 16-05-2017 |
| | | | US | 2019074511 A1 | 07-03-2019 |
| | | | WO | 2017042655 A1 | 16-03-2017 |
| US 2022388865 | A1 | 08-12-2022 | CN | 115440948 A | 06-12-2022 |
| | | | EP | 4098626 A1 | 07-12-2022 |
| | | | KR | 20220163061 A | 09-12-2022 |
| | | | US | 2022388865 A1 | 08-12-2022 |
| CN 117334860 | A | 02-01-2024 | NONE | | |

EPO FORM P0459

For more details about this annex : see Official Journal of the European Patent Office, No. 12/82